(19) Europäisches Patentamt / European Patent Office / Office européen des brevets

(11) **EP 4 657 633 A1**

(12) **EUROPEAN PATENT APPLICATION**
published in accordance with Art. 153(4) EPC

(43) Date of publication:
**03.12.2025 Bulletin 2025/49**

(21) Application number: **24883737.9**

(22) Date of filing: **22.02.2024**

(51) International Patent Classification (IPC):
**H01M 50/244** (2021.01)    **H01M 50/249** (2021.01)
**H01M 50/209** (2021.01)

(52) Cooperative Patent Classification (CPC):
Y02E 60/10

(86) International application number:
**PCT/CN2024/078158**

(87) International publication number:
**WO 2025/091720 (08.05.2025 Gazette 2025/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.10.2023  CN 202311419343**

(71) Applicant: **Contemporary Amperex Technology
Co., Limited
Ningde, Fujian 352100 (CN)**

(72) Inventors:
• **WU, Kai
  Ningde, Fujian 352100 (CN)**
• **KE, Jianhuang
  Ningde, Fujian 352100 (CN)**
• **LI, Yao
  Ningde, Fujian 352100 (CN)**

(74) Representative: **Kraus & Lederer PartGmbB
Thomas-Wimmer-Ring 15
80539 München (DE)**

(54) **BATTERY AND ELECTRIC DEVICE**

(57)    A battery and an electrical apparatus are provided, which belong to the field of battery technologies. The battery includes: a box body having a cavity; a plurality of battery cell groups accommodated in the cavity, the battery cell group each including a plurality of arranged battery cells; a plurality of support plates, the support plates being mounted in the cavity, the plurality of support plates being spaced apart from each other, and the support plates being metal plates, where the battery cell groups are mounted on the support plates such that the support plates support the plurality of battery cells, and the support plates each support at least one of the battery cell groups; and connection plates, the connection plates being disposed between a side of the support plates facing away from the battery cell groups and the box body, and the connection plates being insulating members and being respectively connected to the support plates and the box body.

**FIG. 2**

**Description**

**CROSS-REFERENCE TO RELATED APPLICATIONS**

The present application is based on and claims priority to Chinese Patent Application No. 202311419343.7 filed on October 30, 2023, the entire content of which is incorporated herein by reference.

**TECHNICAL FIELD**

The present application relates to the field of battery technologies, and in particular, to a battery and an electrical apparatus.

**BACKGROUND**

Generally, in a battery, when two battery cells undergo thermal runaway simultaneously, the insulating design between the battery cells and a support plate is damaged, and the two battery cells can be easily conducted through the support plate, leading to a short circuit, or even high-voltage breakdown and arcing, thereby causing potential safety hazards.

**SUMMARY OF THE INVENTION**

The present application provides a battery and an electrical apparatus, so as to solve the problem of potential safety hazards caused by short-circuit heating or even arcing resulting from thermal runaway of two battery cells within the battery.

In a first aspect, an embodiment of the present application provides a battery, including:

a box body having a cavity;
a plurality of battery cell groups accommodated in the cavity, the battery cell groups each comprising a plurality of arranged battery cells;
a plurality of support plates, the support plates being mounted in the cavity, and the plurality of support plates being spaced apart from each other, wherein the battery cell groups are mounted on the support plates such that the support plates support the plurality of battery cells, and the support plates each support at least one of the battery cell groups; and
connection plates, the connection plates being disposed between a side of the support plates facing away from the battery cell groups and the box body, and the connection plates being insulating members and being respectively connected to the support plates and the box body.

In the aforementioned technical solution, by spacing apart the support plates from each other, different support plates are relatively insulated, such that even if two battery cells located on different support plates undergo thermal runaway, the probability of conduction through the support plates is relatively small, thereby reducing the likelihood of formation of a short-circuit loop between any two battery cells undergoing thermal runaway within the battery, reducing the risk of high-voltage breakdown and arcing, and enhancing the safety performance of the battery; and by providing the connection plates, production and machining difficulty is low, assembly is easy, production cost is reduced, and insulation between the plurality of battery cell groups and the box body can be achieved, thereby reducing the probability of dual-point insulation failure in the battery, and enhancing the safety performance.

In some embodiments, the support plates are metal plates, and the support plates are spaced apart from the box body.

In the aforementioned technical solution, by configuring the support plates as metal plates, the thermal conduction efficiency of the support plates is enhanced; the metal plates may be manufactured as liquid-cooling plate capable of heat exchange with the battery cells, thereby improving the working efficiency and the working stability of the battery cells.

In some embodiments, the battery cell groups are provided as a plurality, and the plurality of battery cell groups and the plurality of support plates are arranged in one-to-one correspondence.

In the aforementioned technical solution, the arrangement and assembly of the battery cell groups and the support plates are facilitated, the arrangement density of the plurality of battery cells on the support plates is increased, thereby facilitating management.

In some embodiments, at least one of the connection plates has a protrusion, the protrusion extending into a gap between two adjacent support plates.

In the aforementioned technical solution, by providing the protrusion on the connection plate, the insulation design between different support plates is more stable, thereby enhancing the safety performance of the battery.

In some embodiments, the insulation resistance between two adjacent support plates is R2, which satisfies: R2 ≥ 1 KΩ.

In the aforementioned technical solution, regarding the insulation resistance between two adjacent support plates, by defining a minimum value of the insulation resistance R2 between two adjacent support plates, the insulation effect between different support plates is ensured, thereby enhancing the safety of the battery.

In some embodiments, within the same battery cell group mounted on the same support plate, a potential difference between cases of two adjacent battery cells is $U_i$, which satisfies: $U_i \leq 50$ V.

In the aforementioned technical solution, by setting a maximum value for the potential difference Ui between cases of two battery cells, the likelihood of arcing is reduced, thereby enhancing the safety of the battery.

In some embodiments, $U_i \leq 20$ V.

In the aforementioned technical solution, by further defining the range of the potential difference Ui between cases of two adjacent battery cells within the same battery cell group on the same support plate, the risk of arcing is further reduced.

In some embodiments, within the same battery cell group mounted on the same support plate, a maximum value of a potential difference between cases of two adjacent battery cells is $U_{max}$, and a volumetric energy density of the battery cell is E, which satisfy:

$$1.05*10^3 Wh*V / L \leq \text{E}*U_{\max} \leq 4*10^4 Wh*V / L$$

.

In the aforementioned technical solution, by defining the maximum value and the minimum value of E*$U_{max}$, the likelihood of thermal runaway occurring when two battery cells undergo thermal runaway is reduced, while ensuring that the battery has relatively high cost effectiveness.

In some embodiments, 300 Wh/L ≤ E ≤ 800 Wh/L, and 3.5 V ≤ $U_{max}$ ≤ 50 V.

In the aforementioned technical solution, by defining a range of the maximum value of the potential difference $U_{max}$ between cases of two adjacent battery cells and a range of the volumetric energy density E of the battery cell, the battery cell can be enabled to achieve relatively high cost effectiveness and to be less likely to cause arcing.

In some embodiments, $1.05*10^3 Wh*V / L \leq E * U_{max} \leq 1.6 * 10^4 Wh*V / L$, where 3.5 V ≤ $U_{max}$ ≤ 20 V.

In the aforementioned technical solution, by further defining the range of E*$U_{max}$ and the range of $U_{max}$, the safety of the battery is further enhanced.

In some embodiments, a flow channel for circulation of a heat exchange medium is provided in the support plate, the heat exchange medium being configured to adjust a temperature of the battery cell, where flow channels of the plurality of support plates are in communication via a connection portion, and the connection portion is an insulating member.

In the aforementioned technical solution, while ensuring the insulation design, the flow channels of the support plates are in communication, facilitating thermal management design for the battery cells.

In some embodiments, within two adjacent battery cell groups mounted on two adjacent support plates, a maximum potential difference between cases of two battery cells which are adjacent and respectively belong to the two adjacent battery cell groups is U1, and the electrical resistance of a heat exchange medium within the connection portion is R3, which satisfy:

0.05 V/KΩ ≤ U1/R3 ≤ 400 V/KΩ, where R3 = ρL/S, ρ being a conductivity of the heat exchange medium, L being a length of circulation of the heat exchange medium within the connection portion, and S being a flow cross-sectional area of the connection portion.

In the aforementioned technical solution, by defining the range of U1/R3, the safety performance under the condition of providing the connection portion is ensured, and production costs are controlled.

In some embodiments, 50 V ≤ U1 ≤ 400 V, and 1 KΩ ≤ R3 ≤ 1000 KΩ.

In the aforementioned technical solution, by defining value ranges of U1 and R3, the safety performance of the battery is improved, and production and design costs of the battery are controlled.

In some embodiments, 0.05 V/KΩ ≤ U1/R3 ≤ 200 V/KΩ.

In the aforementioned technical solution, by defining the value range of U1/R3, the safety of the battery is higher.

In some embodiments, a side wall of the battery cell that is provided with a pressure relief mechanism is connected to the support plate, and the support plate has an avoidance structure disposed opposite to the pressure relief mechanism.

In the aforementioned technical solution, by providing the avoidance structure on the support plate, smooth opening of the pressure relief mechanism is facilitated, thereby enhancing the safety performance of the battery.

In some embodiments, the avoidance structures are in one-to-one correspondence with the pressure relief mechanisms;

or, each of the avoidance structures corresponds to a plurality of pressure relief mechanisms.

In some embodiments, the avoidance structure includes a through hole provided in the support plate.

In the aforementioned technical solution, by providing the through hole, actions of the pressure relief mechanism are effectively avoided, thereby ensuring the safety.

In some embodiments, the avoidance structure includes an avoidance groove provided in the support plate, the groove opening of the avoidance groove facing the pressure relief mechanism.

In the aforementioned technical solution, by providing the avoidance grooves, actions of the pressure relief mechanisms are effectively avoided, thereby ensuring the safety, and lowing the machining difficulty.

In some embodiments, a depth of the avoidance groove is H, which satisfies: $2\ mm \le H \le 10\ mm$; and/or, a thickness of a bottom wall of the avoidance groove is h, which satisfies: $0.1\ mm \le h \le 2\ mm$.

In the aforementioned technical solution, design parameters of the avoidance grooves are limited to ensure normal operation of the pressure relief mechanisms and guarantee battery safety.

In some embodiments, the avoidance structure includes an avoidance gap between two adjacent support plates.

In the aforementioned technical solution, by providing the avoidance gap to function to avoid the pressure relief mechanisms, production and processing are made simple, benefiting reduction of the production costs.

In a second aspect, an embodiment of the present application provides an electrical apparatus, including:
the battery according to any one the aforementioned embodiments, the battery being configured to provide electrical energy.

In the aforementioned technical solutions, by using the battery as described in the foregoing embodiments, the risk of formation of a short-circuit loop due to thermal runaway of a plurality of battery cells is reduced, the risk of high-voltage breakdown and arcing is reduced, the safety of the battery is enhanced, thereby improving the safety and operational stability of the electrical apparatus.

## BRIEF DESCRIPTION OF DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.

FIG. 1 is a schematic structural diagram of a vehicle according to some embodiments of the present application;
FIG. 2 is a first structural exploded view of a battery according to some embodiments of the present application;
FIG. 3 is a first cross-sectional structural schematic view of a battery according to some embodiments of the present application;
FIG. 4 is an enlarged view at C in FIG. 3;
FIG. 5 is a second cross-sectional structural schematic view of a battery according to some embodiments of the present application;
FIG. 6 is an enlarged view at D in FIG. 5;
FIG. 7 is a second structural exploded view of a battery according to some embodiments of the present application;
FIG. 8 is a third cross-sectional structural schematic view of a battery according to some embodiments of the present application;
FIG. 9 is a third structural exploded view of a battery according to some embodiments of the present application;
FIG. 10 is a first partial structural exploded view of a battery according to some embodiments of the present application;
FIG. 11 is a second partial structural exploded view of a battery according to some embodiments of the present application;
FIG. 12 is a third partial structural exploded view of a battery according to some embodiments of the present application;
FIG. 13 is a first partial cross-sectional structural schematic view of a battery according to some embodiments of the present application;
FIG. 14 is an enlarged view at E in FIG. 13;
FIG. 15 is a fourth partial structural exploded view of a battery according to some embodiments of the present application; and
FIG. 16 is a fifth partial structural exploded view of a battery according to some embodiments of the present application.

Reference numerals:

vehicle 1, battery 10, motor 20, controller 30;
battery cell group 11, battery cell 111, pressure relief mechanism 1111;
box body 12, bottom plate 121, top cover 122, frame 123, cavity 124;
support plate 13, flow channel 133, avoidance structure 134, through hole 1341, avoidance groove 1342, avoidance gap 1343;
connection plate 14, protrusion 141;
connection portion 15.

## DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. Based on the embodiments in the present application, all other embodiments obtained by those of ordinary skill in the art without creative effort fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "include" and "have" and any variations thereof in the specification and the claims of the present application as well as the above description of the drawings are intended to cover non-exclusive inclusions. The terms "first," "second," etc. in the specification and the claims of the present application as well as the above drawings are used to distinguish different objects, rather than to describe a specific order or primary-secondary relationship.

Reference in the present application to an "embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is understood explicitly and implicitly by those skilled in the art that the embodiments described in the present application can be combined with other embodiments.

In the description of the present application, it should be noted that the terms "mounting", "connecting", "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relation describing associated objects, which means that there may be three relations, for example, A and/or B may represent three situations: A exists alone, both A and B exist, and B exists alone. In addition, the character "/" in the present application generally means that the associated objects before and after it are in an "or" relationship.

In the present application, the term "a plurality of" refers to more than two (including two), similarly, "a plurality of groups" refers to two or more groups (including two groups), and "a plurality of pieces" refers to more than two pieces (including two pieces).

A battery cell mentioned in the embodiments of the present application may include a lithium ion secondary battery, a lithium ion primary battery, a lithium sulfur battery, a sodium/lithium ion battery, a sodium ion battery or a magnesium ion battery and so on, which will not be limited in the embodiments of the present application. The battery cell may be in a cylindrical shape, a flat shape, a cuboid shape or another shape, which is not limited in the embodiments of the present application either. The battery cells are generally classified into three types depending on the way of encapsulation: cylindrical battery cells, square battery cells and pouch battery cells, which are also not limited in the embodiments of the present application.

The battery mentioned in the embodiments of the present application refers to a single physical module comprising one or more battery cells to provide higher voltage and capacity. For example, the battery mentioned in the present application may include a battery module, a battery pack, or the like. The battery generally includes a box body for packaging one or more battery cells or a plurality of battery modules. The box body can prevent liquid or other foreign matters from affecting charging or discharging of the battery cells.

The battery cell includes a shell, an electrode assembly, and an electrolyte solution, where the shell is used to accommodate the electrode assembly and the electrolyte solution. The electrode assembly consists of a positive electrode plate, a negative electrode plate, and a separator. The battery cell operates mainly relying on movement of metal ions between the positive electrode plate and the negative electrode plate. The positive electrode plate includes a positive electrode current collector and a positive electrode active material layer, a surface of the positive electrode current collector is coated with the positive electrode active material layer, the positive electrode current collector not coated with the positive electrode active material layer protrudes from the positive electrode current collector already coated with the positive electrode active material layer, and the positive electrode current collector not coated with the positive electrode active material layer is used as a positive tab. Taking a lithium ion battery as an example, the material of the positive electrode current collector may be aluminum, and the positive electrode active material may be lithium cobalt oxide, lithium iron phosphate, ternary lithium, lithium manganate, etc. The negative electrode plate includes a negative electrode current collector and a negative electrode active material layer, a surface of the negative electrode current collector is coated with the negative electrode active material layer, the negative electrode current collector not coated with the negative electrode active material layer protrudes from the negative electrode current collector already coated with the negative electrode active material layer, and the negative electrode current collector not coated with the negative electrode active material layer is used as a negative tab. The material of the negative electrode current collector may be copper, and the negative electrode active material may be carbon, silicon, etc. In order to ensure that no fusing occurs when a large current passes, there are a plurality of positive tabs which are stacked together, and there are a plurality of negative tabs which are stacked together.

The separator may be of a material such as polypropylene (PP) or polyethylene (PE). In addition, the electrode assembly may have a wound structure or a stacked structure, but the embodiments of the present application are not limited thereto.

In recent years, new energy vehicles have made a leap forward in development. In the field of electric vehicles, power batteries, as power sources of electric vehicles, play an irreplaceable and important role. The battery is formed by a box body and a plurality of battery cells accommodated within the box body. As a core component of new energy vehicles, the battery must meet high requirements in terms of both safety and cycle lifespan.

In a conventional battery, to enable the battery to achieve sufficient power, a plurality of battery cells inside the box body of the battery are typically arranged in a stacked configuration. However, during the use of battery cells, battery cells may undergo thermal runaway due to various conditions such as extrusion, collision, and aging. After thermal runaway of a battery cell, an insulating film between the battery cell and a support plate can easily melt and fail due to the thermal runaway, resulting in failure of the insulating design between the battery cell and the support plate. When two battery cells undergo thermal runaway, the two battery cells may be communicated through the support plate to form a short-circuit loop, causing battery short-circuit or even high-voltage breakdown and arcing, which easily creates safety hazards.

Based on the above considerations, to solve the problem that thermal runaway of two battery cells in the battery easily causes short-circuit heating or even arcing, thereby creating safety hazards, the present application designs a battery including a box body, a plurality of support plates, and a plurality of battery cell groups, where the box body has a cavity, and the plurality of battery cell groups are accommodated in the cavity; the battery cell group each includes a plurality of arranged battery cells; the plurality of support plates are installed in the cavity, and the plurality of support plates are spaced apart from each other; the battery cell groups are installed on the support plates such that the support plates support the plurality of battery cells, and the support plates each support at least one of the battery cell groups.

In the battery with such a structure, the plurality of support plates are arranged spaced apart, making different support plates relatively insulated, such that even if two battery cells located on different support plates undergo thermal runaway, the probability of conduction through the support plates is small, thereby reducing the risk of forming a short-circuit loop due to thermal runaway of a plurality of battery cells, and enhancing the safety performance of the battery.

An embodiment of the present application provides an electrical apparatus that uses a battery as a power source. The electrical apparatus may be, but is not limited to, a mobile phone, a tablet, a laptop, an electric toy, an electric tool, a storage battery car, an electric vehicle, a ship, a spacecraft, etc. Among them, the electric toy may include fixed or mobile electric toys, such as a game machine, an electric vehicle toy, an electric ship toy, and an electric airplane toy, etc. The spacecraft may include an airplane, a rocket, a space shuttle and a spaceship, etc.

For the convenience of description in the following embodiments, an electrical apparatus being a vehicle 1 according to an embodiment of the present application is taken as an example for the description.

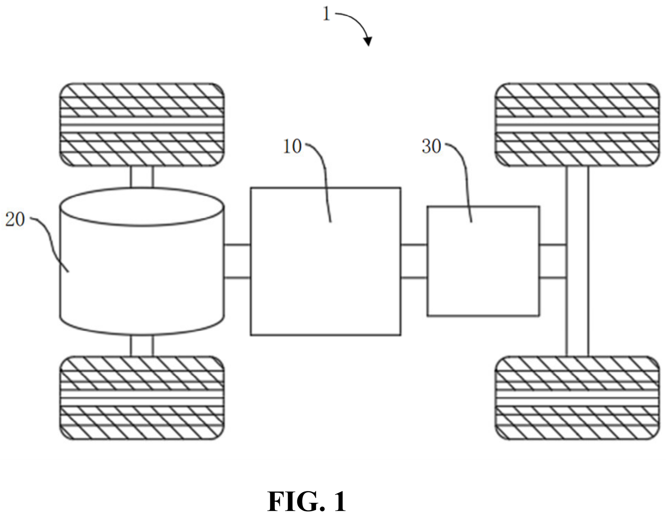

FIG. 1 is a schematic structural diagram of a vehicle 1 according to an embodiment of the present application. The vehicle 1 may be a fuel vehicle, a gas vehicle or a new energy vehicle, and the new energy vehicle may be an all-electric vehicle, a hybrid electric vehicle, an extended range electric vehicle, or the like. A motor 20, a controller 30, and a battery 10 may be disposed inside the vehicle 1, where the controller 30 is configured to control the battery 10 to supply power to the motor 20. As an example, the battery 10 may be disposed at the bottom or the head or the tail of the vehicle 1. The battery 10 may be configured to supply power to the vehicle 1, for example, the battery 10 may be used as an operating power source of the vehicle 1, which is used for a circuit system of the vehicle 1, for example, for operation power requirements of the vehicle 1 during starting, navigation and running. In another embodiment of the present application, the battery 10 can serve not only as an operating power supply for the vehicle 1, but also as a driving power source for the vehicle 1, so as to replace or partially replace fuel or natural air to provide driving power for the vehicle 1.

In order to meet different power usage requirements, the battery 10 may include a plurality of battery cells 111, where the plurality of battery cells 111 may be in series connection, parallel connection or series-parallel connection. The series-parallel connection refers to a combination of series connection and parallel connection.

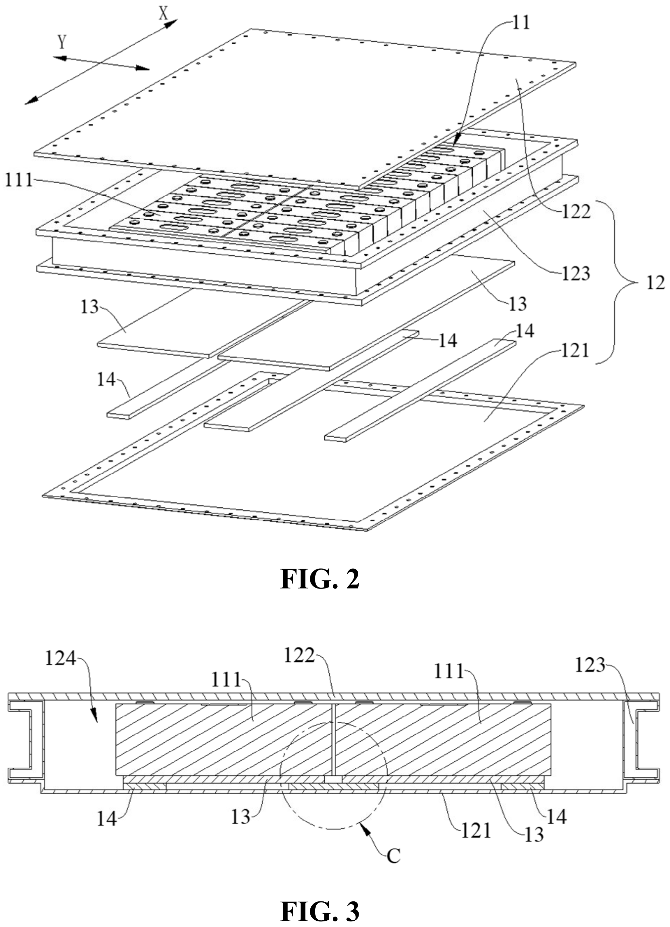

As shown in FIG. 2, it is a structural exploded view of a battery 10 according to an embodiment of the present application. The battery 10 includes a box body 12 and a plurality of battery cells 111, where the battery cells 111 are configured to be accommodated in the box body 12. Here, the box body 12 is used to provide an assembly space for the battery cell 111, and the box body 12 may be of various structures. In some embodiments, the box body 12 may include a bottom plate 121, a top cover 122, and a frame 123, where the frame 123 may be a hollow structure with two open ends, the bottom plate 121 and the top cover 122 are respectively covered on the open sides of the frame 123, and the bottom plate 121, the top cover 122, and the frame 123 collectively define a cavity 124, the cavity 124 being the assembly space for accommodating the battery cells 111. Certainly, the box body 12 formed by the bottom plate 121, the top cover 122, and the frame 123 may be of various shapes, for example, a cylinder, a rectangular prism, etc.

In the battery 10, the plurality of battery cells 111 may be connected in series or in parallel or be in parallel-series connection. The parallel-series connection means that the plurality of battery cells 111 are connected in both series and parallel. The plurality of battery cells 111 may be directly connected in series, in parallel, or in hybrid connection together, and then the entirety constituted by the plurality of battery cells 111 is accommodated in the box body 12. Of course, the battery 10 may also be in a form where a plurality of battery cells 111 are first connected in series, in parallel, or in hybrid connection to constitute a battery cell group 11, and then a plurality of battery cell groups 11 are connected in series, in parallel, or in hybrid connection to form an entirety, and accommodated in the box body 12. The battery 10 may further include other structures. For example, the battery 10 may further include a busbar component configured to achieve electrical connections between the plurality of battery cells 111.

Please refer to FIG. 2, the battery 10 includes a plurality of battery cell groups 11. The battery cell groups 11 each include a plurality of battery cells 111, the battery cells 111 of each battery cell group 11 are arranged along a first direction X, and the plurality of battery cell groups 11 are arranged along a second direction Y. The first direction X and the second direction Y are respectively a length direction of the box body 12 and a width direction of the box body 12, where the first direction X and the second direction Y are perpendicular to each other.

Each battery cell 111 may be a secondary battery or a primary battery; or it may be a lithium-sulfur battery, a sodium-ion battery or a magnesium-ion battery, but is not limited thereto. The battery cells 111 may be cylindrical, flat, rectangular, or in other shapes. By way of example, in FIG. 2, the battery cell 111 is configured to be in the shape of a rectangular prism.

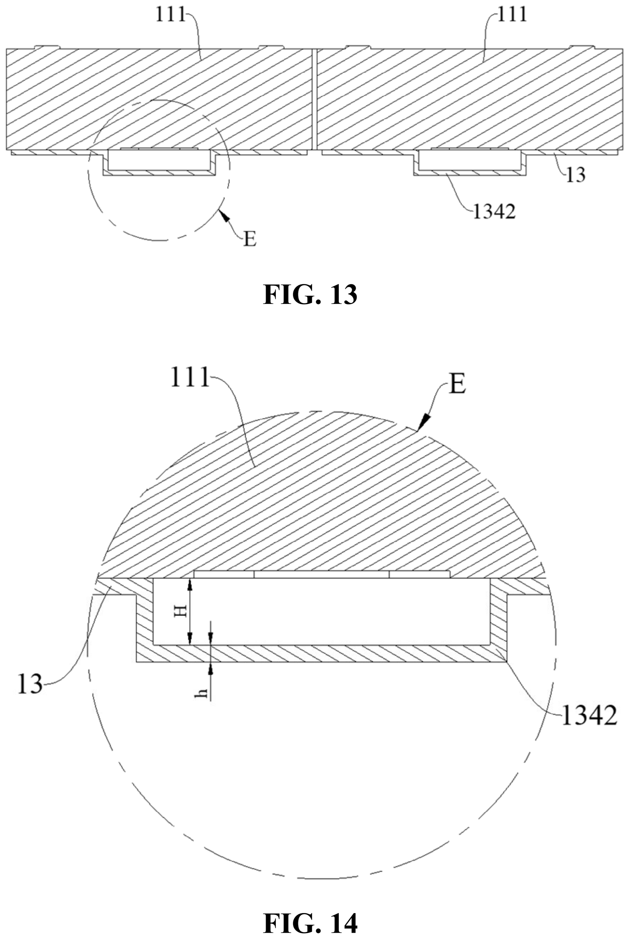

According to some embodiments of the present application, as shown in FIG. 2 to FIG. 16, specifically referring to FIG. 2, an embodiment of the present application provides a battery 10. The battery 10 may include a box body 12, a plurality of battery cell groups 11, a plurality of support plates 13, and a connection plate 14.

The box body 12 may have a cavity 124, and the plurality of battery cell groups 11 may be accommodated in the cavity 124; the battery cell group 11 may include a plurality of arranged battery cells 111; the plurality of support plates 13 may be installed in the cavity 124, the plurality of support plates 13 are spaced apart from each other, and the support plates 13 may be metal plates; the battery cell groups 11 may be installed on the support plates 13 such that the support plates 13 support the plurality of battery cells 111, and the support plates 13 each support at least one of the battery cell groups.

The box body 12 may be the box body 12 as in the aforementioned embodiment, which is not redundantly described herein, and in this implementation, the box body 12 may be configured as a rectangular prism. The battery cell group 11 may be accommodated in the cavity 124, and the battery cell group 11 may include a plurality of battery cells 111 to increase the capacity of the battery 10. The specific number of battery cells 111 included in one battery cell group 11 is not limited herein and is designed according to actual requirements.

The plurality of support plates 13 are installed in the cavity 124, and the battery cell groups 11 are installed on the support plates 13. The battery cell groups 11 may be fixedly connected to the support plates 13 by adhesion, enabling the plurality of battery cells 111 to be connected to the box body 12 via the support plates 13, where the support plates 13 may be made of metal material or plastic material, etc.

Among these, the number of support plates 13 may be two, three, four, or more than four, the number of battery cell groups 11 on each support plate 13 may be one, two, three, or four, and the specific number is not limited herein and is determined according to actual requirements of the internal circuit design of the battery 10.

The support plates 13 are spaced apart from each other and may be electrically insulated arranged relative to each other, such that when battery cells 111 located on different support plates 13 undergo thermal runaway, the probability of conduction through the support plates 13 is reduced, thereby reducing the risk of short-circuit or high-voltage breakdown and arcing caused by simultaneous thermal runaway of two battery cells 111, and enhancing the safety of the battery 10.

As shown in FIG. 2 to FIG. 16, specifically referring to FIG. 2 and FIG. 3, the battery 10 may further include connection plates 14, where the connection plates 14 may be disposed between a side of the support plates 13 facing away from the battery cell groups 11 and the box body 12, and the connection plates 14 may be insulating members and are respectively connected to the support plates 13 and the box body 12.

The support plate 13 may be spaced apart from the box body 12 along a thickness direction, and the connection plate 14 may be disposed between the side of the support plate 13 facing away from the battery cell group 11 and the box body 12. Two sides of the connection plate 14 are respectively connected to the support plate 13 and the box body 12, such that the support plate 13 is installed on the box body 12 via the connection plate 14. Specifically, the connection plate 14 may be fixedly connected to the support plate 13 by means of adhesion, and the connection plate 14 may be fixedly connected to the box body 12 by means of adhesive, such that the support plate 13 is relatively fixed to the box body 12.

The connection plate 14 may be an insulating member. By configuring the connection plate 14 as an insulating member and spacing the support plate 13 apart from the box body 12, the support plate 13 and the box body 12 are insulated from each other. Here, a plurality of connection plates 14 may be provided, where the plurality of connection plates 14 are arranged spaced apart, which can ensure the installation strength while reducing the material costs.

In practical implementation, first, the plurality of support plates 13 are installed spaced apart in the cavity, then the plurality of battery cell groups 11 are installed on the plurality of support plates 13, where each support plate 13 may support at least one battery cell group 11. It can be understood that one support plate 13 may also have a plurality of battery cell groups 11 installed thereon, and the specific number is not limited herein. Since the support plates 13 are spaced apart from each other, different support plates 13 are relatively insulated, such that even if two battery cells 111 located on different support plates 13 undergo thermal runaway, the probability of conduction through the support plates 13 is small.

According to the battery 10 provided in the embodiments of the present application, by spacing apart the support plates 13 from each other, different support plates 13 are relatively insulated, such that even if two battery cells 111 located on different support plates 13 undergo thermal runaway, the probability of conduction through the support plates 13 is relatively small, thereby reducing the likelihood of formation of a short-circuit loop between any two battery cells 111 undergoing thermal runaway within the battery 10, reducing the risk of high-voltage breakdown and arcing, and enhancing the safety performance of the battery 10; and by providing the connection plates 14, production and machining difficulty is low, assembly is easy, production cost is reduced, and insulation between the plurality of battery cell groups 11 and the box body can be achieved, thereby reducing the probability of dual-point insulation failure in the battery 10, and enhancing the safety performance.

According to some embodiments of the present application, the support plate 13 may be a metal plate, and the support plate 13 may be spaced apart from the box body 12.

In this implementation, the support plate 13 may be a metal plate. The metal plate has good thermally conductive performance, such that the support plate 13 can be configured as a liquid-cooling plate to control the temperature of a plurality of battery cells 111. Specifically, a flow channel may be provided in the support plate 13, and by circulating a heat exchange medium within the flow channel, regulation of the temperature of the battery cell group 11 is achieved, thereby enhancing the working efficiency and stability of the battery 10. Furthermore, the support plate 13 may be spaced apart from the box body 12, such that the support plate 13 is insulated from the box body 12, reducing the probability of conduction of the battery cell 111 with the box body 12 via the support plate 13 in the event of thermal runaway, thereby reducing safety hazards.

According to the battery 10 according to the embodiments of the present application, by configuring the support plates as metal plates, the thermal conduction efficiency of the support plates is enhanced; the metal plates may be manufactured as liquid-cooling plate capable of heat exchange with the battery cells, thereby improving the working efficiency and the working stability of the battery cells.

In some embodiments, the insulation resistance between the support plate 13 and the box body 12 is R1, which may satisfy: $R1 \geq 1\,M\Omega$. Optionally, R1 may be $1\,M\Omega$, $2\,M\Omega$, $3\,M\Omega$, $5\,M\Omega$, $10\,M\Omega$, or other resistance values greater than or equal to $1\,M\Omega$, which is not limited herein.

In this implementation, by defining the minimum value of the insulation resistance R1 between the support plate 13 and the box body 12, the insulation requirements between the support plate 13 and the box body 12 are met, thus satisfying the insulation requirements between the battery cell 111 and the box body 12, providing better insulation effects, and reducing the probability of breakdown, thereby ensuring the safety of the battery 10.

According to some embodiments of the present application, the battery cell group 11 may be provided as a plurality, and the plurality of battery cell groups 11 may be arranged in a one-to-one correspondence with a plurality of support plates 13.

In this implementation, the plurality of battery cell groups 11 may be arranged in a one-to-one correspondence with the plurality of support plates 13. That is, one battery cell group 11 is provided on each support plate 13, facilitating the arrangement and assembly of the battery cell groups 11 and the support plates 13, and increasing the arrangement density of the plurality of battery cells 111 on the support plate 13, thereby facilitating management.

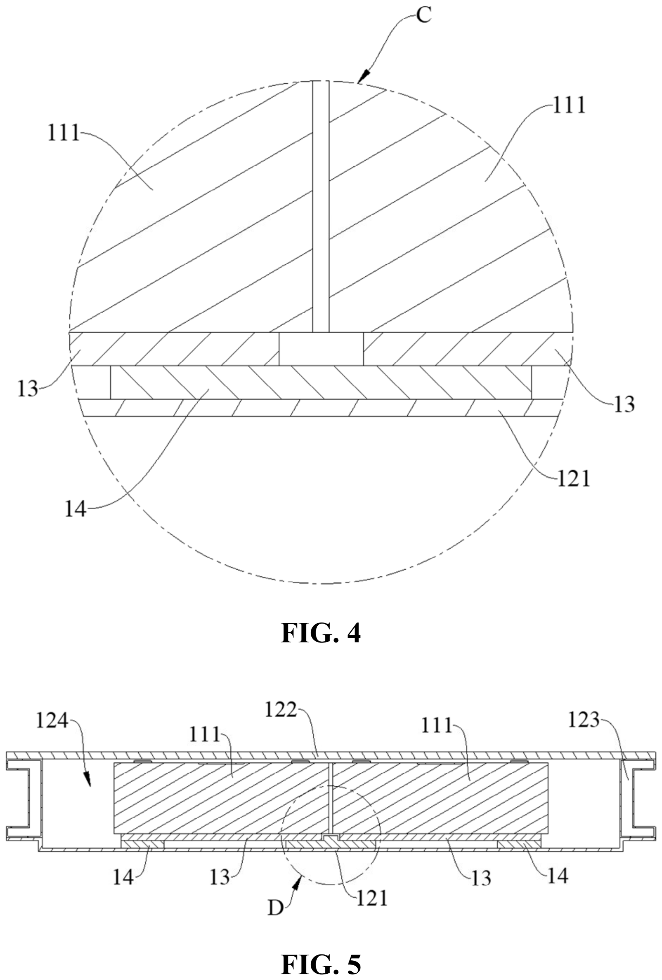

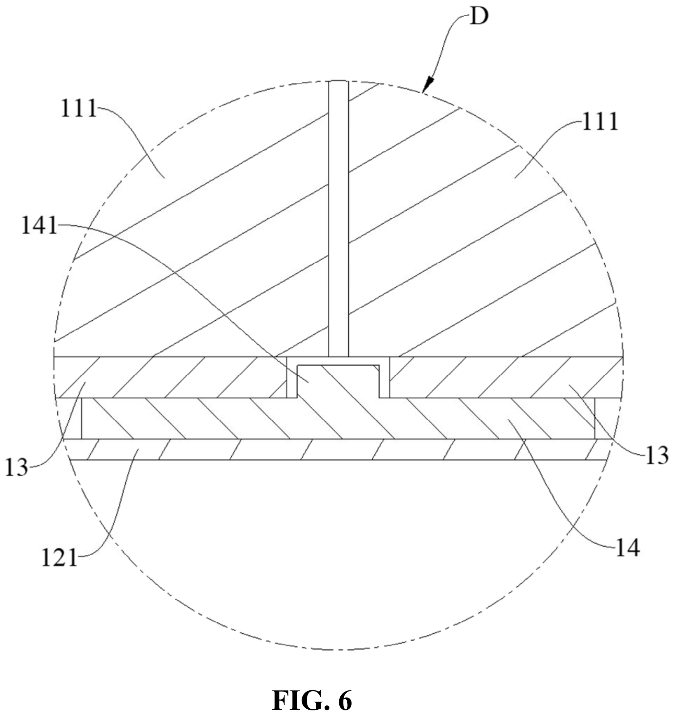

According to some embodiments of the present application, as shown in FIG. 5 and FIG. 6, at least one of the connection plates 14 has a protrusion 141, the protrusion 141 extending into a gap between two adjacent support plates 13.

In this implementation, at least one connection plate 14 may have a protrusion 141, and the protrusion 141 may extend into the gap between two adjacent support plates 13, so as to further isolate the two support plates 13, such that even if vibration or shaking occurs during the use of the battery 10, the two support plates 13 will not move close to each other and become conducted, thereby enhancing the stability of the insulation structure and improving the safety performance of the battery 10.

Here, on the sides of every two adjacent support plates 13 that are close to each other, a connection plate 14 may be provided, and a protrusion 141 may be provided on the connection plate 14, such that a protrusion 141 is provided within the gap between every two adjacent support plates 13.

According to the embodiments of the present application, by providing the protrusion 141 on the connection plate 14, the insulation design between different support plates is made more stable, thereby improving the safety performance of the battery 10.

According to some embodiments of the present application, the insulation resistance between two adjacent support plates 13 is R2, which may satisfy: R2 ≥ 1 kΩ.

It can be understood that the greater the insulation resistance between different support plates 13, the lower the probability of short circuit and high-voltage breakdown; and the smaller the distance between two support plates 13, the smaller the resistance, and the greater the distance between two support plates 13, the greater the resistance. Additionally, the distance between two adjacent support plates 13 is the closest. By defining the insulation resistance between two adjacent support plates 13, the insulation resistance between the support plates 13 can meet the requirements.

Here, the minimum value of the insulation resistance R2 between two adjacent support plates 13 is 1 kΩ, and R2 may be 1 kΩ, 10 kΩ, 100 kΩ, 1000 kΩ, 2000 kΩ, 10000 kΩ, or other resistance values greater than 1 kΩ, which are not specifically limited herein.

According to the insulation resistance defined in the embodiments of the present application, by defining a minimum value of the insulation resistance R2 between two adjacent support plates 13, the insulation effect between different support plates 13 is ensured, thereby enhancing the safety of the battery 10.

According to some embodiments of the present application, within the same battery cell group 11 mounted on the same support plate 13, a potential difference between cases of two adjacent battery cells 111 is Ui, which satisfies: $U_i \leq 50$ V.

In a case where two battery cells 111 located on the same support plate 13 simultaneously undergo thermal runaway, the probability of conduction of the two battery cells 111 via the support plate 13 where they are located is very high; therefore, the voltage difference between two adjacent battery cells 111 has a maximum value to reduce the probability of arcing.

By defining the maximum value of the potential difference $U_i$ between the cases of two battery cells 111, the probability of arcing is reduced, thereby improving the safety of the battery 10.

Here, the potential difference $U_i$ between the cases of two adjacent battery cells 111 may be 50 V, 45 V, 40 V, 30 V, 20 V, 10 V, or other values less than 50 V, which is not specifically limited herein.

According to some embodiments of the present application, $U_i \leq 20$ V.

In this implementation, by further defining the range of the potential difference $U_i$ between cases of two adjacent battery cells 111 within the same battery cell group 11 on the same support plate 13, the risk of arcing is further reduced.

Here, the potential difference Ui between the cases of the two adjacent battery cells 111 may be 20 V, 15 V, 10 V, 5 V, 3.5 V, or other values less than 20 V, which is not specifically limited herein.

According to some embodiments of the present application, within the same battery cell group 11 mounted on the same support plate 13, a maximum value of a potential difference between cases of two adjacent battery cells 111 is $U_{max}$, and a volumetric energy density of the battery cell 111 is E, which satisfy: $1.05 \times 10^3 Wh \cdot V / L \leq E \cdot U_{max} \leq 4 \times 10^4 Wh \cdot V / L$.

In this implementation, based on the product of the maximum value of the potential difference $U_{max}$ between the cases of two adjacent battery cells 111 in the same battery cell group 11 and the volumetric energy density E of the battery cell 111, the risk of arcing after thermal runaway of the two adjacent battery cells 111 in the same battery cell group 11 can be evaluated.

Referring to Table 1, Table 1 shows the performance after thermal runaway of two adjacent battery cells 111 in the case where the battery cell 111 has different volumetric energy densities and different maximum potential differences.

According to Table 1, it can be seen that, in Comparative Examples 1 to 3, when $E \cdot U_{max}$ is greater than $40000 Wh \cdot V / L$, arcing is triggered after thermal runaway of two adjacent battery cells 111 in the same battery cell group 11, which can easily cause safety hazards. In Embodiment 9, when $E \cdot U_{max} = 40000 Wh \cdot V / L$, a minor short circuit occurs with heat generation but no arcing is triggered after thermal runaway of two adjacent battery cells 111 in the same battery cell group 11. This is the maximum critical point, and under the condition of $E \cdot U_{max} \leq 4 \times 10^4 Wh \cdot V / L$, arcing will not be triggered, thereby resulting in relatively high safety.

Table 1

| | E(Wh/L) | $U_{max}$(V) | $E*U_{max}$ ( $Wh*V/L$ ) | Results |
|---|---|---|---|---|
| Embodiment 1 | 300 | 3.5 | 1050 | Normal |
| Embodiment 2 | 300 | 10 | 3000 | Normal |
| Embodiment 3 | 300 | 20 | 6000 | Normal |
| Embodiment 4 | 500 | 10 | 5000 | Normal |
| Embodiment 5 | 500 | 15 | 7500 | Normal |
| Embodiment 6 | 500 | 20 | 10000 | Normal |
| Embodiment 7 | 800 | 10 | 8000 | Normal |
| Embodiment 8 | 800 | 20 | 16000 | Normal |
| Embodiment 9 | 800 | 50 | 40000 | Minor short circuit with heat generation |
| Comparative Example 1 | 800 | 60 | 48000 | Arcing |
| Comparative Example 2 | 800 | 80 | 64000 | Arcing |
| Comparative Example 3 | 800 | 100 | 80000 | Arcing |

At the same time, considering the usage power requirements of the battery 10 and the characteristics of the battery 10, the volumetric energy density and the potential difference of the battery cell 111 are not allowed to be too low, and by defining the minimum value of $E*U_{max}$, the volume utilization rate of the battery cell 111 is ensured, and the cost effectiveness of the battery 10 is enhanced.

Here, the value range of $E*U_{max}$ is [1050$Wh*V/L$, 40000$Wh*V/L$]. Specifically, $E*U_{max}$ can be 1050$Wh*V/L$, 3000$Wh*V/L$, 5000$Wh*V/L$, 6000$Wh*V/L$, 7500$Wh*V/L$, 8000$Wh*V/L$, 10000$Wh*V/L$, 16000$Wh*V/L$, 32000$Wh*V/L$, 40000$Wh*V/L$, or other values between 1050$Wh*V/L$ and 40000$Wh*V/L$.

According to the embodiments of the present application, by limiting the maximum value and the minimum value of $E*U_{max}$, the probability of arcing occurring when two battery cells 111 undergo thermal runaway is reduced, while ensuring that the battery 10 has a relatively high cost effectiveness.

According to some embodiments of the present application, the maximum value of the potential difference between the cases of two adjacent battery cells 111 in the same battery cell group 11 may be $U_{max}$, the volumetric energy density of the battery cell 111 may be E, which may satisfy: 300 Wh/L ≤ E ≤ 800 Wh/L, and 3.5 V ≤ $U_{max}$ ≤ 50 V.

It can be understood that if the voltage of the battery cell 111 is relatively low, the battery 10 requires more battery cells 111 to be connected in series under the same usage power in order to obtain the required current and voltage. This will lead to an increase in the proportion of mechanical components within the battery 10, cause a decrease in the volumetric utilization rate of effective charge/discharge units, and reduce the cost effectiveness of the battery 10 pack. Conversely, if the voltage of the battery cell 111 is too high, it is prone to cause arcing.

According to the experimental data in Table 1, under the conditions of 300 Wh/L ≤ E ≤ 800 Wh/L and 3.5 V ≤ Umax ≤ 50 V, the battery 10 has relatively high cost effectiveness, and is less likely to cause arcing.

The value range of the volumetric energy density E of the battery cell 111 is [300 Wh/L, 800 Wh/L]. Specifically, E may be 300 Wh/L, 400 Wh/L, 500 Wh/L, 600 Wh/L, 700 Wh/L, 800 Wh/L, or other values between 300 Wh/L and 800 Wh/L, which is not specifically limited herein.

The value range of the maximum value of the potential difference $U_{max}$ between the cases of two adjacent battery cells 111 in the same battery cell group 11 is [3.5 V, 50 V]. Specifically, $U_{max}$ may be 3.5 V, 10 V, 15 V, 20 V, 50 V, or other values between 3.5 V and 50 V, which is not specifically limited herein.

According to the embodiments of the present application, by defining a range of the maximum value of the potential difference $U_{max}$ between cases of two adjacent battery cells 111 and a range of the volumetric energy density E of the battery cell 111, the battery cell 111 can be enabled to achieve relatively high cost effectiveness and to be less likely to cause arcing.

According to some embodiments of the present application,

$$1.05*10^3 Wh*V/L \le E*U_{max} \le 1.6*10^4 Wh*V/L,$$

where 3.5 V ≤ Umax ≤ 20 V.

In this implementation, the value range of $E*U_{max}$ is [1050$Wh*V/L$, 16000$Wh*V/L$]. Referring to Table 1, under the condition of this value range, the risk of minor short circuit with heat generation after thermal runaway of two adjacent battery cells 111 in the same battery cell group 11 is relatively low, and the probability of causing arcing is lower, thereby providing higher safety. Specifically, $E*U_{max}$ may be 1050*Wh\*V / L*, 3000*Wh\*V / L,* 5000*Wh\*V / L*, 6000*Wh\*V / L*, 7500*Wh\*V / L*, 8000*Wh\*V / L*, 10000*Wh\*V / L*, 16000*Wh\*V / L*, or other values between 1050*Wh\*V / L* and 16000*Wh\*V / L*.

In this implementation, the value range of $U_{max}$ is [3.5 V, 20 V]. Under the condition of this value range, the risk of minor short circuit with heat generation after thermal runaway of two adjacent battery cells 111 in the same battery cell group 11 is relatively low, and the probability of causing arcing is lower, thereby providing higher safety. Specifically, $U_{max}$ may be 3.5 V, 10 V, 15 V, 20 V, or other values between 3.5 V and 20 V, which is not specifically limited herein.

According to the embodiments of the present application, by further defining the ranges of $E*U_{max}$ and $U_{max}$, the safety of the battery 10 is further enhanced.

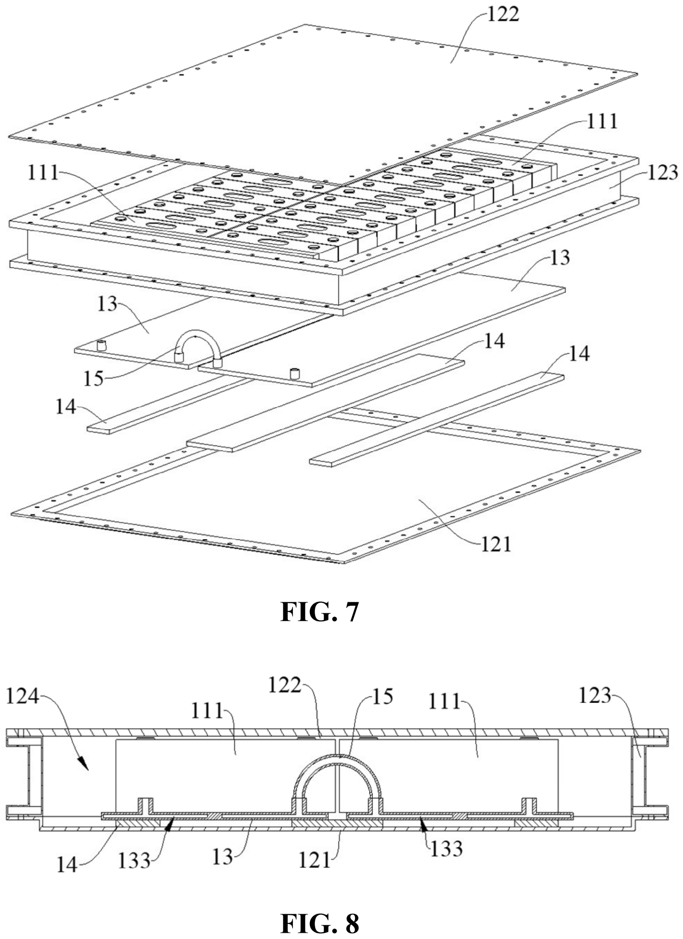

According to some embodiments of the present application, as shown in FIG. 7 and FIG. 8, a flow channel 133 for circulation of a heat exchange medium may be provided in the support plate 13, the heat exchange medium being configured to adjust a temperature of the battery cell 111; where flow channels 133 of the plurality of support plates 13 are in communication via a connection portion 15, and the connection portion 15 is an insulating member.

In this implementation, a flow channel 133 for circulation of a heat exchange medium may be provided in the support plate 13, where the heat exchange medium may be cooling water, refrigerant, or the like. The temperature of the battery cell 111 is regulated via the heat exchange medium to heat up or cool down the battery cell 111, thereby improving the usage efficiency and service life of the battery cell 111.

The flow channels 133 of the plurality of support plates 13 may be in communication via the connection portion 15, such that the heat exchange medium can circulate within the plurality of support plates 13, thereby reducing the interfaces between the flow channels 133 of the support plates 13 and the outside, facilitating installation; and the connection portion 15 is an insulating member, such that two support plates 13 are arranged electrically insulated.

In actual implementation, referring to FIG. 7 and FIG. 8, taking two support plates 13 being provided an example, the two support plates 13 is each provided with one inlet and one outlet, where the inlet of the first of the two support plates 13 is used to connect to the outlet of an external heat exchanger to introduce the heat exchange medium into the battery 10; and the outlet of the first of the two support plates 13 is in communication with the inlet of the second via the connection portion 15, such that the heat exchange medium enters the second after circulating in the first of the two support plates 13, and flows out through the outlet of the second to circulate to the inlet of the heat exchanger, thereby completing one cycle of the heat exchange medium. Here, the inlets and outlets of the two support plates 13 may be provided on the same side to reduce the space occupied by pipe joints and the connection portion 15, thereby improving the space utilization rate inside the battery 10.

According to the connection portion 15 provided in the embodiments of the present application, under the condition of ensuring an insulation design, the flow channels 133 of the support plates 13 are in communication, thereby facilitating the thermal management design for the battery cell 111.

According to some embodiments of the present application, within two adjacent battery cell groups 11 mounted on two adjacent support plates 13, a maximum potential difference between cases of two battery cells 111 which are adjacent and respectively belong to the two adjacent battery cell groups 11 is U1, and the electrical resistance of a heat exchange medium within the connection portion 15 is R3, which satisfy:

0.05 V/k$\Omega$ ≤ U1/R3 ≤ 400 V/k$\Omega$, where R3 = $\rho$L/S, $\rho$ being the electrical conductivity of the heat exchange medium, L being the length of flow of the heat exchange medium within the connection portion 15, and S being the flow cross-sectional area of the connection portion 15.

It should be noted that although the connection portion 15 is provided as an insulating member with a high insulation resistance value, the heat exchange medium flowing within the connection portion 15 is generally an electrically conductive material. After the flow channels 133 of two adjacent support plates 13 are communicated via the connection portion 15, if one battery cell 111 on each of the two adjacent support plates 13 undergoes thermal runaway, the voltage between the two battery cells 111 may cause breakdown of the heat exchange medium, resulting in arcing, or an electrolytic cell structure may be formed through the heat exchange medium, inducing an electrolysis reaction that causes a temperature rise at the connection position between the support plate 13 and the connection portion 15, which may lead to softening of the connection portion 15 or even leakage of the heat exchange medium, creating safety hazards.

In this implementation, in two adjacent battery cell groups 11 installed on two adjacent support plates 13, the maximum potential difference U1 between the cases of two battery cells 111 that are adjacent and respectively belong to the two adjacent battery cell groups 11 is the maximum voltage that the heat exchange medium in the connection portion 15 can bear. If this potential difference is large, the probability of breakdown of the heat exchange medium is high; similarly, if the resistance of the heat exchange medium within the connection portion 15 is low, the probability of breakdown through the heat exchange medium is high.

It can be understood that the resistance value of the heat exchange medium depends on the electrical conductivity of the heat exchange medium, the length of the connection portion 15, and the flow cross-sectional area of the connection portion 15.

In this implementation, in two adjacent battery cell groups 11 installed on two adjacent support plates 13, through testing of the results after thermal runaway of two battery cells 111 that are adjacent and respectively belong to the two adjacent battery cell groups 11 under different U1/R3 conditions, a reasonable range for U1/R3 is obtained. Referring to Table 2, Table 2 shows, in two adjacent battery cell groups 11 installed on two adjacent support plates 13, the performance after thermal runaway of two battery cells 111 that are adjacent and respectively belong to the two adjacent battery cell groups 11 under different U1/R3 conditions.

Table 2

|  | U1 (V) | R3 (KΩ) | U1/R3 (V/KΩ) | Results |
|---|---|---|---|---|
| Embodiment 1 | 50 | 1000 | 0.05 | Normal |
| Embodiment 2 | 50 | 100 | 0.5 | Normal |
| Embodiment 3 | 50 | 1 | 50 | Normal |
| Embodiment 4 | 200 | 1000 | 0.2 | Normal |
| Embodiment 5 | 200 | 100 | 2 | Normal |
| Embodiment 6 | 200 | 1 | 200 | Minor temperature rise at connection portion |
| Embodiment 7 | 400 | 1000 | 0.4 | Normal |
| Embodiment 8 | 400 | 100 | 4 | Normal |
| Embodiment 9 | 400 | 1 | 400 | Significant temperature rise at connection portion |
| Comparative Example 1 | 400 | 0.8 | 500 | Arcing |
| Comparative Example 2 | 400 | 0.6 | 666.6667 | Arcing |
| Comparative Example 3 | 400 | 0.2 | 2000 | Arcing |

According to Table 2, it can be seen that, in Comparative Examples 1 to 3, when U1/R3 is greater than 400 V/kΩ, in two adjacent battery cell groups 11 installed on two adjacent support plates 13, arcing is triggered after thermal runaway of two battery cells 111 that are adjacent and respectively belong to the two adjacent battery cell groups 11, which can easily cause safety hazards. In Embodiment 9, when U1/R3 is equal to 400 V/kΩ, the connection portion 15 experiences significant temperature rise but no arcing is triggered. This is the maximum critical point, and under the condition of U1/R3 ≤ 400 V/kΩ, arcing will not be triggered, thereby resulting in relatively high safety.
Furthermore, considering the actual production and machining costs, U1/R3 has a minimum value, and the minimum value is 0.05 V/kΩ.
Here, the value range of U1/R3 is [0.05 V/kΩ, 400 V/kΩ]. Specifically, U1/R3 may be 0.05 V/kΩ, 0.2 V/kΩ, 0.4 V/kΩ, 0.5 V/kΩ, 2 V/kΩ, 4 V/kΩ, 50 V/kΩ, 200 V/kΩ, 400 V/kΩ, or other values between 0.05 V/kΩ and 400 V/kΩ, which is not specifically limited herein.
According to the embodiments of the present application, by defining the range of U1/R3, the safety performance under the condition of providing the connection portion 15 is ensured, and production costs are controlled.
According to some embodiments of the present application, 50 V ≤ U1 ≤ 400 V, and 1 kΩ ≤ R3 ≤ 1000 kΩ.
It can be understood that during the design and production of the battery 10, the actual usage power is generally taken as the standard. When U1 is large, the output power of the battery 10 is high, and the applicable range is wide. However, when the battery cell 111 undergoes thermal runaway, it easily causes high-voltage breakdown. Therefore, when U1 is at the maximum value, R3 has a minimum value to reduce safety risks. When U1 is small, the safety is higher but the cost performance is lower; in a case where U1 is at the minimum value, R3 has a maximum value, such that the connection portion 15 between adjacent support plates 13 and the electrical conductivity of the heat exchange medium do not increase the design costs due to excessively high resistance requirements, thereby reducing design difficulty and decreasing the risk of liquid leakage caused by an excessively long connection portion 15 or difficulties in pipeline arrangement, etc.
According to the aforementioned Table 2, when U1 takes the maximum value of 400 V, R3 has a minimum value of 1 kΩ; when U1 takes the minimum value of 50 V, R3 has a maximum value of 1000 kΩ.
Here, the value range of U1 is [50 V, 400 V]. Specifically, U1 may be 50 V, 100 V, 150 V, 200 V, 250 V, 300 V, 400 V, or other values between 50 V and 400 V, which is not specifically limited herein.
The value range of R3 is [1 kΩ, 1000 kΩ]. Specifically, R3 may be 1 kΩ, 10 kΩ, 100 kΩ, 300 kΩ, 500 kΩ, 800 kΩ, 1000 kΩ, or other values between 1 kΩ and 1000 kΩ, which is not specifically limited herein.
According to the embodiments of the present application, by defining the value ranges of U1 and R3, the safety performance of the battery 10 is improved, and the production and design costs of the battery 10 are controlled.

According to some embodiments of the present application, 0.05 V/k$\Omega$ $\leq$ U1/R3 $\leq$ 200 V/k$\Omega$.

In this implementation, the value range of U1/R3 is [0.05 V/k$\Omega$, 200 V/k$\Omega$]. Referring to Table 2, in Embodiment 6, under the condition of U1/R3 = 200 V/k$\Omega$, in two adjacent battery cell groups 11 installed on two adjacent support plates 13, after thermal runaway of two battery cells 111 that are adjacent and respectively belong to the two adjacent battery cell groups 11, the connection portion 15 experiences minor temperature rise. Therefore, under the condition of U1/R3 $\leq$ 200 V/k$\Omega$, the safety is higher.

Specifically, U1/R3 may be 0.05 V/k$\Omega$, 0.2 V/k$\Omega$, 0.4 V/k$\Omega$, 0.5 V/k$\Omega$, 2 V/k$\Omega$, 4 V/k$\Omega$, 50 V/k$\Omega$, 200 V/k$\Omega$, or other values between 0.05 V/k$\Omega$ and 200 V/k$\Omega$, which is not specifically limited herein.

According to the value range of U1/R3 in the embodiments of the present application, the safety of the battery 10 is higher.

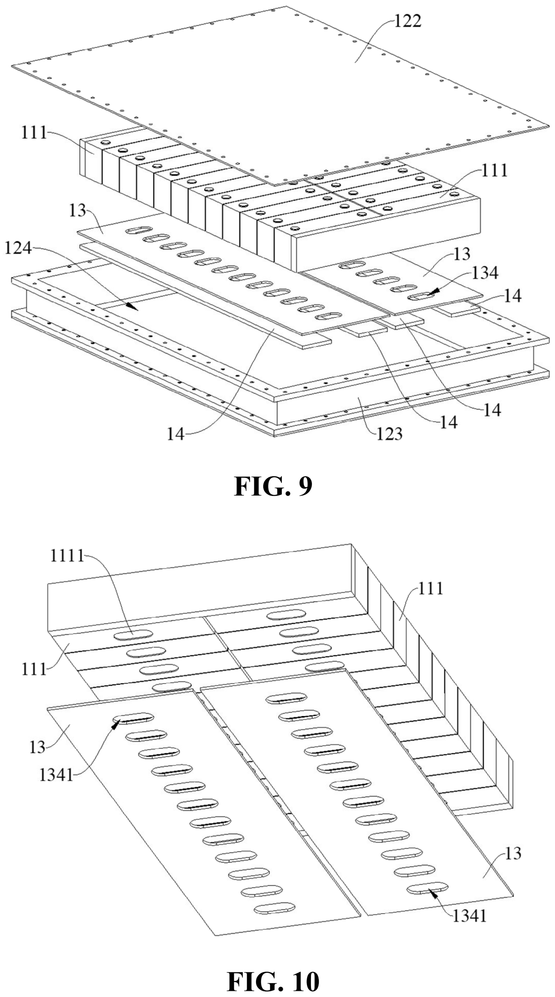

According to some embodiments of the present application, as shown in FIG. 9 to FIG. 16, a side wall of the battery cell 111 that is provided with a pressure relief mechanism 1111 may be connected to the support plate 13, and the support plate 13 may have an avoidance structure 134 disposed opposite to the pressure relief mechanism 1111.

The side wall of the battery cell 111 may be provided with the pressure relief mechanism 1111; the specific form of the pressure relief mechanism 1111 is not limited herein and may be a common pressure relief mechanism 1111 on the market; in the event of thermal runaway of the battery cell 111, the pressure relief mechanism 1111 may actively open to exhaust gas, so as to reduce the internal pressure of the battery cell 111, and prevent rupturing and explosion of the case of the battery cell 111, thereby improving the safety.

In this implementation, the side wall of the battery cell 111 that is provided with the pressure relief mechanism 1111 may be connected to the support plate 13; by providing the avoidance structure 134 disposed opposite to the pressure relief mechanism 1111 on the support plate 13, an avoidance effect for the pressure relief mechanism 1111 is achieved, such that while the support plate 13 provides a supporting function for the battery cell group 11, the pressure relief mechanism 1111 can open smoothly, thereby improving the safety of the battery 10.

According to the embodiments of the present application, by providing the avoidance structure 134 on the support plate 13, smooth opening of the pressure relief mechanism 1111 is facilitated, thereby enhancing the safety performance of the battery 10.

According to some embodiments of the present application, the avoidance structures 134 may be in one-to-one correspondence with the pressure relief mechanisms 1111; or, each avoidance structure 134 may correspond to a plurality of pressure relief mechanisms 1111.

In one example, as shown in FIG. 9 and FIG. 10, a plurality of avoidance structures 134 may be provided on each support plate 13, and the number of avoidance structures 134 on each support plate 13 is the same as the number of battery cells 111 on the support plate 13, such that the avoidance structures 134 can be in one-to-one correspondence with the pressure relief mechanisms 1111 to provide avoidance effects for the pressure relief mechanisms 1111, thereby reducing the mutual influence between the pressure relief mechanisms 1111 and improving the stability.

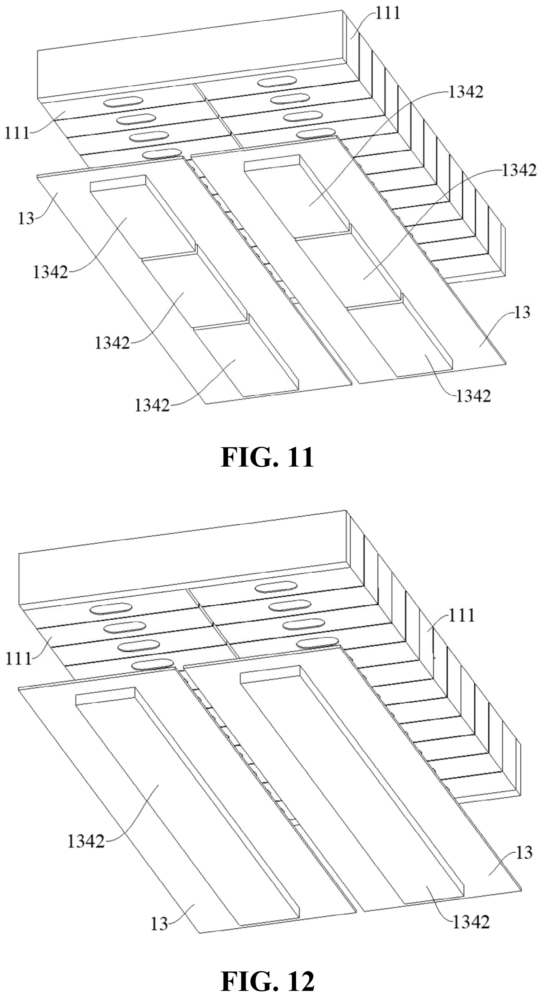

In another example, as shown in FIG. 11 to FIG. 16, in a case where the pressure relief mechanisms 1111 of a plurality of battery cells 111 are arranged neatly, one or more avoidance structures 134 may be provided on each support plate 13, such that each avoidance structure 134 can correspond to a plurality of pressure relief mechanisms 1111 to provide avoidance effects for the plurality of pressure relief mechanisms 1111, and the support plate 13 is easy to machine.

According to some embodiments of the present application, as shown in FIG. 9 and FIG. 10, the avoidance structure 134 may include a through hole 1341 provided in the support plate 13.

In this implementation, a plurality of through holes 1341 may be provided on each support plate 13, and the plurality of through holes 1341 are arranged in one-to-one correspondence with the plurality of pressure relief mechanisms 1111, where the cross-sectional size of the through hole 1341 may be the same as the cross-sectional size of the pressure relief mechanism 1111, or the cross-sectional size of the through hole 1341 may be slightly larger than the cross-sectional size of the pressure relief mechanism 1111, so as to effectively avoid the action of the pressure relief mechanism 1111 and ensure the safety.

According to some embodiments of the present application, as shown in FIG. 11 to FIG. 14, the avoidance structure 134 may include an avoidance groove 1342 provided in the support plate 13, where a groove opening of the avoidance groove 1342 may face the pressure relief mechanism 1111.

In this implementation, the avoidance structure 134 may include the avoidance groove 1342 provided in the support plate 13, and the groove opening of the avoidance groove 1342 is disposed facing the pressure relief mechanism 1111, such that when the pressure relief mechanism 1111 opens, it can move into the avoidance groove 1342, thereby achieving the effect of avoiding the pressure relief mechanism 1111. Here, the avoidance groove 1342 may extend along an arrangement direction of the battery cells 111, and one or more avoidance grooves may be provided along the arrangement direction of the battery cells 111, such that one avoidance groove 1342 can correspond to a plurality of pressure relief mechanisms 1111, resulting in low machining difficulty.

According to some embodiments of the present application, a depth of the avoidance groove 1342 is H, which may satisfy: 2 mm ≤ H ≤ 10 mm; and/or, a thickness of a bottom wall of the avoidance groove 1342 is h, which may satisfy: 0.1 mm ≤ h ≤ 2 mm.

When the pressure relief mechanism 1111 opens, a certain activity space is required; by defining the minimum value of the depth H of the avoidance groove 1342, sufficient activity space for the pressure relief mechanism 1111 is ensured. Furthermore, in the event of thermal runaway of the battery cell 111, the pressure relief mechanism 1111 opens to discharge high-temperature and high-pressure gas outward. The high-temperature and high-pressure gas can break through the bottom wall of the avoidance groove 1342 to escape the avoidance groove 1342. By defining the maximum value of the thickness h of the bottom wall of the avoidance groove 1342, the discharged gas can relatively easily break through the bottom wall of the avoidance groove 1342 and be smoothly discharged into the box body 12.

It can be understood that according to the machining processes and the actual production requirements, if the depth H of the avoidance groove 1342 is too large, it occupies more space, which reduces the space utilization rate; similarly, if the thickness h of the bottom wall of the avoidance groove 1342 is too small, machining process requirements are high, which increases the production costs.

In this implementation, the value range of the depth H of the avoidance groove 1342 is [2 mm - 10 mm]. Specifically, the depth H of the avoidance groove 1342 may be 2 mm, 4 mm, 6 mm, 8 mm, 10 mm, or other values between 2 mm and 10 mm, which is not limited herein. The value range of the thickness h of the bottom wall of the avoidance groove 1342 is [0.1 mm - 2 mm]. Specifically, the thickness h of the bottom wall of the avoidance groove 1342 may be 0.1 mm, 0.4 mm, 0.8 mm, 1.2 mm, 1.6 mm, 2 mm, or other values between 0.1 mm and 2 mm, which is not limited herein.

According to the embodiments of the present application, by defining design parameters of the avoidance groove 1342, normal operation of the pressure relief mechanism 1111 can be ensured, thereby guaranteeing the safety of the battery 10.

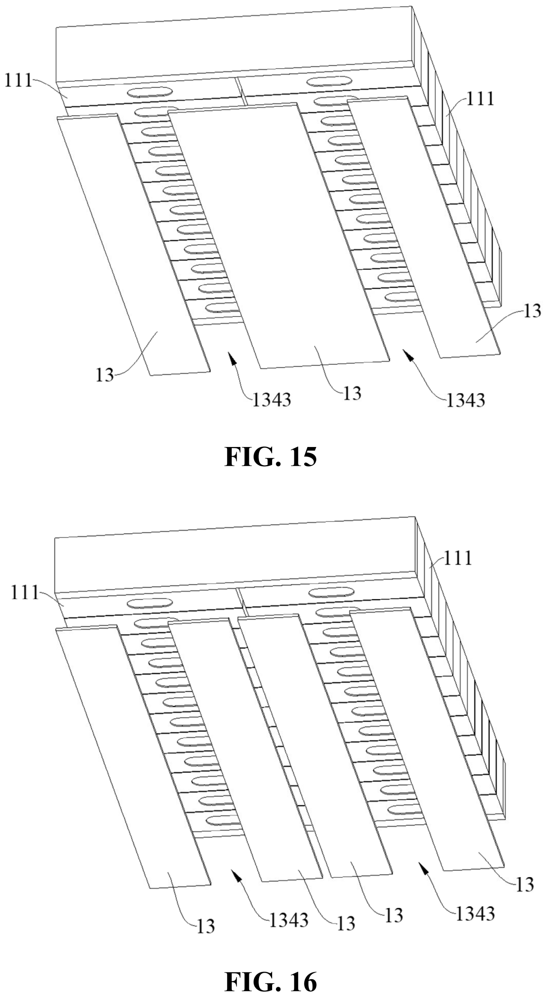

According to some embodiments of the present application, as shown in FIG. 15 and FIG. 16, the avoidance structure 134 may include an avoidance gap 1343 between two adjacent support plates.

In this implementation, by providing a plurality of support plates 13, the support plates 13 are spaced apart from each other to form the avoidance gap 1343. At least one avoidance gap 1343 corresponds to the plurality of pressure relief mechanisms 1111 of each battery cell group 11, such that the pressure relief mechanism 1111 can face the avoidance gap 1343 between two adjacent support plates. The avoidance structure 134 may include the avoidance gap 1343 between two adjacent support plates, and through the avoidance gap 1343, the effect of avoiding the pressure relief mechanism 1111 is achieved, which makes production and machine simple, and is beneficial for reducing the production costs.

According to some embodiments of the present application, the present application further provides an electrical apparatus including the battery 10 described in any one of the above solutions, and the battery 10 is configured to provide electric energy for the electrical apparatus.

The electrical apparatus may be any of the aforementioned devices or systems in which the battery 10 is applied.

According to a first embodiment of the present application, as shown in FIG. 2 to FIG. 4, the present application provides a battery 10. The battery 10 includes a box body 12, a plurality of battery cell groups 11, a plurality of support plates 13, and a plurality of connection plates 14.

The box body 12 includes a bottom plate 121, a top cover 122, and a frame 123, where the frame 123 is a hollow structure with two open ends, the bottom plate 121 and the top cover 122 are respectively covered on the open sides of the frame 123, and the bottom plate 121, the top cover 122, and the frame 123 collectively define a cavity 124.

The plurality of battery cell groups 11 are accommodated in the cavity 124, the battery cell group 11 each including a plurality of arranged battery cells 111.

The plurality of support plates 13 are installed in the cavity 124, the plurality of battery cell groups 11 are in one-to-one correspondence with the plurality of support plates 13, the support plates 13 are spaced apart from each other, and the support plates 13 are spaced apart from the box body 12. The support plates 13 are metal plates, the battery cell groups 11 are installed on the support plates 13, and the plurality of battery cells 111 are supported via the support plates 13.

The connection plate 14 is disposed between a side of the support plate 13 facing away from the battery cell group 11 and the box body; the connection plate 14 is an insulating member to insulate the support plate 13 from the box body 12, such that the plurality of battery cells 111 are relatively insulated from the box body 12; and the insulation resistance between the support plate 13 and the box body 12 is R1 ≥ 1 MΩ, and the support plates 13 are insulated from each other.

The insulation resistance between two adjacent support plates 13 is R2 ≥ 1 kΩ. In the same battery cell group 11 installed on the same support plate 13, the potential difference between the cases of two adjacent battery cells 111 is Ui ≤ 50 V, and in the embodiments, $U_i \leq 20$ V.

In the same battery cell group 11 installed on the same support plate 13, the maximum value of the potential difference between the cases of two adjacent battery cells 111 is $U_{max}$, and the volumetric energy density of the battery cell 111 is E, which satisfy $1.05*10^3 Wh*V/L \leq E*U_{max} \leq 4*10^4 Wh*V/L$, where 300 Wh/L ≤ E ≤ 800 Wh/L, and $3.5 V \leq U_{max} \leq 50$ V. In the embodiment, $1.05*10^3 Wh*V/L \leq E*U_{max} \leq 1.6*10^4 Wh*V/L$, where $3.5 V \leq U_{max} \leq 20$ V.

According to a second embodiment of the present application, as shown in FIG. 5 and FIG. 6, the present application provides a battery 10. The battery 10 includes a box body 12, a battery cell group 11, a support plate 13, and a connection plate 14.

For the arrangements of the box body 12, the battery cell group 11, and the support plate 13, reference can be made to the first embodiment, which will not be repeated herein.

The difference between this embodiment and the first embodiment is that a side of the connection plate 14 facing the support plate 13 is provided with a protrusion 141, where the protrusion 141 extends into a gap between two adjacent support plates 13 to isolate the two adjacent support plates 13.

According to a third embodiment of the present application, as shown in FIG. 7 and FIG. 8, the present application provides a battery 10. The battery 10 includes a box body 12, a battery cell group 11, a support plate 13, and a connection plate 14.

For the arrangements of the box body 12, the battery cell group 11, and the connection plate 14, reference can be made to the first embodiment, which will not be repeated herein.

The difference between this embodiment and the first embodiment is that the battery 10 further includes a connection portion 15, and a flow channel 133 is provided in each support plate 13, where a heat exchange medium flows within the flow channel 133, and flow channels 133 of two adjacent support plates 13 are in communication via the connection portion 15, such that the heat exchange medium circulates within flow channels 133 of a plurality of support plates 13. Each support plate 13 is provided with two interfaces. The two interfaces are respectively connected to two ends of the flow channel 133 within the support plate 13, interfaces of two adjacent support plates 13 that are close to each other are in communication via the connection portion 15, and the two interfaces of each support plate 13 are provided on the same side in a length direction of the box body 12.

In two adjacent battery cell groups 11 installed on two adjacent support plates 13, the maximum potential difference between the cases of two battery cells 111 that are adjacent and respectively belong to the two adjacent battery cell groups 11 is U1, and the resistance of the heat exchange medium within the connection portion 15 is R3, which satisfy: $0.05 \, \text{V/k}\Omega \leq U1/R3 \leq 400 \, \text{V/k}\Omega$, where $50 \, \text{V} \leq U1 \leq 400 \, \text{V}$, and $1 \, \text{k}\Omega \leq R3 \leq 1000 \, \text{k}\Omega$. In the embodiment, $0.05 \, \text{V/k}\Omega \leq U1/R3 \leq 200 \, \text{V/k}\Omega$.

According to a fourth embodiment of the present application, as shown in FIG. 9 and FIG. 10, the present application provides a battery 10. The battery 10 includes a box body 12, a battery cell group 11, a support plate 13, and a connection plate 14.

For the arrangements of the box body 12, the battery cell group 11, and the connection plate 14, reference can be made to the first embodiment, which will not be repeated herein.

The difference between this embodiment and the first embodiment is that a side wall of each of a plurality of battery cells 111 in the battery cell group 11 that contacts the support plate 13 is provided with a pressure relief mechanism 1111, and the support plate 13 is provided with a plurality of through holes 1341, where the plurality of through holes 1341 are in one-to-one correspondence with the pressure relief mechanisms 1111 of the plurality of battery cells 111 on the support plate 13, and a cross-sectional size of the through hole 1341 is not less than a cross-sectional size of the corresponding pressure relief mechanism 1111.

According to a fifth embodiment of the present application, as shown in FIG. 11 to FIG. 14, the present application provides a battery 10. The battery 10 includes a box body 12, a battery cell group 11, a support plate 13, and a connection plate 14.

For the arrangements of the box body 12, the battery cell group 11, and the connection plate 14, reference can be made to the fourth embodiment, which will not be repeated herein.

The difference between this embodiment and the fourth embodiment is that at least one avoidance groove 1342 is provided on the support plate 13 instead of a plurality of through holes 1341, one avoidance groove 1342 corresponding to pressure relief mechanisms 1111 of a plurality of battery cells, where a depth H of the avoidance groove 1342 satisfies: $2 \, \text{mm} \leq H \leq 10 \, \text{mm}$, and a thickness h of a bottom wall of the avoidance groove 1342 satisfies: $0.1 \, \text{mm} \leq h \leq 2 \, \text{mm}$.

According to a sixth embodiment of the present application, as shown in FIG. 15 and FIG. 16, the present application provides a battery 10. The battery 10 includes a box body 12, a battery cell group 11, a support plate 13, and a connection plate 14.

For the arrangements of the box body 12, the battery cell group 11, and the connection plate 14, reference can be made to the first embodiment, which will not be repeated herein.

The difference between this embodiment and the first embodiment is that the plurality of support plates 13 are spaced apart from each other to form avoidance gaps 1343, where pressure relief mechanisms 1111 of the plurality of battery cells 111 in the battery cell group 11 correspond to the avoidance gaps 1343.

It should be noted that in case of no conflicts, the embodiments in the present application and features in the embodiments may be combined with each other.

The above descriptions are merely embodiments of the present application and are not intended to limit the present application. For those skilled in the art, the present application may have various modifications and changes. Any modification, equivalent replacement, improvement, and the like made within the spirit and principle of the present application shall fall within the scope of protection of the present application.

**Claims**

1. A battery, comprising:

a box body having a cavity;
a plurality of battery cell groups accommodated in the cavity, the battery cell groups each comprising a plurality of arranged battery cells;
a plurality of support plates, the support plates being mounted in the cavity, and the plurality of support plates being spaced apart from each other, wherein the battery cell groups are mounted on the support plates such that the support plates support the plurality of battery cells, and the support plates each support at least one of the battery cell groups; and
connection plates, the connection plates being disposed between a side of the support plates facing away from the battery cell groups and the box body, and the connection plates being insulating members and being respectively connected to the support plates and the box body.

2. The battery according to claim 1, wherein the support plates are metal plates, and the support plates are spaced apart from the box body.

3. The battery according to claim 1, wherein the plurality of battery cell groups and the plurality of support plates are arranged in one-to-one correspondence.

4. The battery according to claim 1, wherein at least one of the connection plates has a protrusion, the protrusion extending into a gap between two adjacent support plates.

5. The battery according to any one of claims 1 to 4, wherein the insulation resistance between two adjacent support plates is R2, which satisfies: $R2 \geq 1$ K$\Omega$.

6. The battery according to any one of claims 1 to 4, wherein within the same battery cell group mounted on the same support plate, a potential difference between cases of two adjacent battery cells is $U_i$, which satisfies: $U_i \leq 50$ V.

7. The battery according to claim 6, wherein $U_i \leq 20$ V.

8. The battery according to any one of claims 1 to 4, wherein within the same battery cell group mounted on the same support plate, a maximum value of a potential difference between cases of two adjacent battery cells is $U_{max}$, and a volumetric energy density of the battery cell is E, which satisfy:

$$1.05*10^3 Wh*V/L \leq \mathrm{E}*U_{max} \leq 4*10^4 Wh*V/L .$$

9. The battery according to claim 8, wherein 300 Wh/L $\leq$ E $\leq$ 800 Wh/L, and 3.5 V $\leq U_{max} \leq$ 50 V.

10. The battery according to claim 8, wherein

$$1.05*10^3 Wh*V/L \leq \mathrm{E}*U_{max} \leq 1.6*10^4 Wh*V/L ,$$

wherein 3.5V$\leq U_{max} \leq$20V.

11. The battery according to any one of claims 1 to 4, wherein a flow channel for circulation of a heat exchange medium is provided within the support plate, the heat exchange medium being configured to adjust a temperature of the battery cell, wherein flow channels of the plurality of support plates are in communication via a connection portion, and the connection portion is an insulating member.

12. The battery according to claim 11, wherein within two adjacent battery cell groups mounted on two adjacent support plates, a maximum potential difference between cases of two battery cells which are adjacent and respectively belong to the two adjacent battery cell groups is U1, and the electrical resistance of a heat exchange medium within the connection portion is R3, which satisfy:

0.05 V/KΩ ≤ U1/R3 ≤ 400 V/KΩ, where R3 = ρL/S, ρ being a conductivity of the heat exchange medium, L being a length of circulation of the heat exchange medium within the connection portion, and S being a flow cross-sectional area of the connection portion.

13. The battery according to claim 12, wherein 50 V ≤ U1 ≤ 400 V, and 1 KΩ ≤ R3 ≤ 1000 KΩ.

14. The battery according to claim 12, wherein 0.05 V/KΩ ≤ U1/R3 ≤ 200 V/KΩ.

15. The battery according to claim 1 or 2, wherein a side wall of the battery cell that is provided with a pressure relief mechanism is connected to the support plate, and the support plate has an avoidance structure disposed opposite to the pressure relief mechanism.

16. The battery according to claim 15, wherein the avoidance structures are in one-to-one correspondence with the pressure relief mechanisms;
or, each of the avoidance structures corresponds to a plurality of pressure relief mechanisms.

17. The battery according to claim 15, wherein the avoidance structure comprises a through hole provided in the support plate.

18. The battery according to claim 15, wherein the avoidance structure comprises an avoidance groove provided in the support plate, the groove opening of the avoidance groove facing the pressure relief mechanism.

19. The battery according to claim 18, wherein a depth of the avoidance groove is H, which satisfies: 2 mm ≤ H ≤ 10 mm; and/or, a thickness of a bottom wall of the avoidance groove is h, which satisfies: 0.1 mm ≤ h ≤ 2 mm.

20. The battery according to claim 15, wherein the avoidance structure comprises an avoidance gap between two adjacent support plates.

21. An electrical apparatus, comprising:
the battery according to any one of claims 1 to 20, the battery being configured to provide electrical energy.

**FIG. 1**

**FIG. 2**

**FIG. 3**

C

111

111

13

13

121

14

**FIG. 4**

124

122

111

111

123

14

13

121

13

14

D

**FIG. 5**

**FIG. 6**

**FIG. 7**

**FIG. 8**

**FIG. 9**

**FIG. 10**

**FIG. 11**

**FIG. 12**

111    111

111

13

1342

**FIG. 13**

111    E

13

H

h

1342

**FIG. 14**

111

111

13

13

1343    13    1343

**FIG. 15**

111

111

13

13

1343    13    13    1343

**FIG. 16**

## INTERNATIONAL SEARCH REPORT

| International application No. |
|---|
| **PCT/CN2024/078158** |

| A. | CLASSIFICATION OF SUBJECT MATTER |
|---|---|

H01M50/244(2021.01)i; H01M50/249(2021.01)i; H01M50/209(2021.01)i

According to International Patent Classification (IPC) or to both national classification and IPC

| B. | FIELDS SEARCHED |
|---|---|

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; CNKI; WPABS; DWPI; USTXT; WOTXT; EPTXT: 支撑, 支承, 承载, 单体, 电池, 分隔, 隔开, 分开, 间隙, 隔间, 间隔, support, hold, cell, battery, partition, separate

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 117154324 A (CONTEMPORARY AMPEREX TECHNOLOGY CO., LTD.) 01 December 2023 (2023-12-01) claims 1-21, description, paragraphs [0004]-[0188], and figures 1-16 | 1-21 |
| X | CN 116325321 A (CONTEMPORARY AMPEREX TECHNOLOGY CO., LTD.) 23 June 2023 (2023-06-23) description, paragraphs [0004]-[0137], and figures 1-10 | 1-7, 15, 16, 20, 21 |
| A | CN 116325321 A (CONTEMPORARY AMPEREX TECHNOLOGY CO., LTD.) 23 June 2023 (2023-06-23) description, paragraphs [0004]-[0137], and figures 1-10 | 8-14, 17-19 |
| A | CN 219226493 U (CONTEMPORARY AMPEREX TECHNOLOGY CO., LTD.) 20 June 2023 (2023-06-20) entire document | 1-21 |
| A | CN 218975741 U (DONGGUAN LANGTAITONG TECHNOLOGY CO., LTD.) 05 May 2023 (2023-05-05) entire document | 1-21 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 May 2024** | **11 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2024/078158** |

**C.    DOCUMENTS CONSIDERED TO BE RELEVANT**

| Category* | Citation of document, with indication, where appropriate, of the relevant passages | Relevant to claim No. |
|---|---|---|
| A | CN 218586159 U (CONTEMPORARY AMPEREX TECHNOLOGY CO., LTD.) 07 March 2023 (2023-03-07)<br>entire document | 1-21 |
| A | CN 209071424 U (CONTEMPORARY AMPEREX TECHNOLOGY CO., LTD.) 05 July 2019 (2019-07-05)<br>entire document | 1-21 |
| A | JP 2020123467 A (NIPPON LIGHT METAL CO., LTD.) 13 August 2020 (2020-08-13)<br>entire document | 1-21 |

Form PCT/ISA/210 (second sheet) (July 2022)

**EP 4 657 633 A1**

### INTERNATIONAL SEARCH REPORT
Information on patent family members

International application No.

**PCT/CN2024/078158**

| Patent document cited in search report | | | Publication date (day/month/year) | Patent family member(s) | | | Publication date (day/month/year) |
|---|---|---|---|---|---|---|---|
| CN | 117154324 | A | 01 December 2023 | CN | 117154324 | B | 05 April 2024 |
| CN | 116325321 | A | 23 June 2023 | CN | 219180683 | U | 13 June 2023 |
| | | | | WO | 2024000103 | A1 | 04 January 2024 |
| CN | 219226493 | U | 20 June 2023 | | None | | |
| CN | 218975741 | U | 05 May 2023 | | None | | |
| CN | 218586159 | U | 07 March 2023 | | None | | |
| CN | 209071424 | U | 05 July 2019 | EP | 3654407 | A1 | 20 May 2020 |
| | | | | EP | 3654407 | B1 | 17 March 2021 |
| | | | | US | 2020161610 | A1 | 21 May 2020 |
| | | | | US | 11158900 | B2 | 26 October 2021 |
| | | | | WO | 2020098621 | A1 | 22 May 2020 |
| JP | 2020123467 | A | 13 August 2020 | | None | | |

Form PCT/ISA/210 (patent family annex) (July 2022)

29

**REFERENCES CITED IN THE DESCRIPTION**

**Patent documents cited in the description**

- CN 202311419343